# EUROPEAN PATENT SPECIFICATION

(11) **EP 2 923 260 B1**
(45) Date of publication and mention of the grant of the patent: **06.05.2020**
(21) Application number: 12888743.7
(22) Date of filing: 20.11.2012
(51) Int. Cl.: G06F 3/0488, G06F 3/0482, G06F 3/0485, G06F 3/0484, G06F 3/01

(54) **A GRAPHICAL USER INTERFACE FOR A PORTABLE COMPUTING DEVICE**
GRAFISCHE BENUTZERSCHNITTSTELLE FÜR EINE TRAGBARE BERECHNUNGSVORRICHTUNG
INTERFACE UTILISATEUR GRAPHIQUE POUR DISPOSITIF INFORMATIQUE PORTABLE

(43) Date of publication of application: 30.09.2015
(73) Proprietor: Jolla OY, 33210 Tampere (FI)
(72) Inventor: PETRELL, Joona, FI-33100 Tampere (FI); ROPPOLA, Jaakko Tapani Samuel, FI-34140 Mutala (FI); SCHÜLE, Martin, FI-33500 Tampere (FI)
(74) Representative: Suominen, Kaisa Liisa
(86) International application number: PCT/FI2012/051143
(87) International publication number: WO 2014/080066

(56) References cited:
- EP-A1- 2 474 894
- EP-A1- 2 474 894
- EP-A2- 1 962 480
- US-A1- 2008 256 454
- US-A1- 2008 306 683
- US-A1- 2010 083 190
- US-A1- 2010 083 190
- US-A1- 2010 088 641
- US-A1- 2010 162 179
- US-A1- 2010 299 599
- US-A1- 2011 055 752
- US-A1- 2011 055 752
- US-A1- 2011 248 928
- US-A1- 2012 218 192
- US-A1- 2013 024 808
- US-B1- 6 677 965

## Description

### Field of the Invention

This invention relates to computing devices, in particular to a portable computing device with a touch screen for providing a selection method for menu structures. The invention further relates to a method, an apparatus and a computing device program product for providing a selection method for menu structures of a computing device.

### Background of the Invention

Portable computing devices, such as mobile phones or smart phones, with physical key(s) or a physical keyboard can be used without looking at a display of the device since the keys could be felt with fingers. In addition, for easy handling some of the keys are designed differently or the keys are indicated by bossages or the like to indicate the location of certain keys. However, portable computing devices with touch screen keys cannot be used without looking at a display of the device, because touch screen keys are arranged to be used by presence and location of a touch within a certain area of the display.

Conventionally, menu structures in portable computing devices with physical keys or touch screen keys have been implemented as pop-up menus which appear when, for example, a specified key or a touch screen is touched in a specified place such as at the bottom of the screen. From the pop-up menus, users can make a selection by mouse, by physical keys or by touching the wanted menu item or items. The type of selection depends on the type of the portable computing device. US 2010/083190 A1 discloses a touch gesture interface for selecting an option by an upward touch gesture.

### Summary of the Invention

The invention is defined in the independent claims and various embodiments are defined in the dependent claims. Embodiments which do not fall within the scope of the claims do not describe part of the present invention.

The present invention relates to a method for a computing device, for example, for a portable computing device with a touch screen. The user of the computing device may handle menu structures and selection of menu options of a graphical user interface of the computing device by touch. The user opens menu structures by touching to an arbitrary point on the touch screen and select menu options from the open menu structure by releasing the touch when the menu option within or near a selection area of the menu structure. The computing device may be a computer, such as a smart phone, having a touch screen and running an operating system, such as Linux, iOS or Android, or some other computing device or portable computing device with a touch screen, such as a game console, an all-in-one computer, a tablet computer, a personal digital assistant (PDA), a satellite navigation device, a mobile phone, or a video game.

Various aspects of the invention include a method for a computing device having a graphical user interface comprising a touch screen, an apparatus that is configured to perform the method and a computer program product comprising instructions to perform the method.
According to a first aspect of the invention, there is provided a method for a computing device having a graphical user interface comprising a display for displaying a user interface view and a touch screen for receiving input from a user. The method comprises displaying a user interface element on the display, opening a menu structure on a side of the user interface element by a touch on the touch screen, wherein the menu structure comprises at least one menu option and a selection area and wherein said at least one menu option is movable in comparison to the selection area, and activating a menu option that is closest to the selection area.

The menu structure that is closest to the selection area is activated when the touch is detected to be released from the touch screen. The method further comprises indicating an openable menu structure by a menu indicator on a side of the user interface element. According to an embodiment, the menu structure indicated by the menu indicator is when the detected touch is detected to move away from the menu indicator. The method further comprises indicating movement of at least one menu option over the selection area by visual, audio and/or haptic feedback. Indicating the activation of the menu option from the menu structure by visual, audio and/or haptic feedback. The method further comprises indicating a second menu indicator on a second side of the user interface element if a menu structure is available. According to an embodiment, the user interface element is a photo, a lock screen view or any other view of a terminal device, a web page, a calendar application or a list of phone numbers, phone history, bookmarks, dates, or photos of photo gallery. According to an embodiment, the menu option that is closest to the selection area is displayed, other menu options are invisible. The method further comprises providing a feedback for the user when the menu option is activated. The method further comprises locking the menu structure open and providing a feedback for the user when the end of the menu structure is reached. According to an embodiment, the feedback provided for the user when the end of the menu structure is reached is different than feedback provided for the user when the menu option is activated.

According to a second aspect of the invention, there is provided an apparatus comprising a processing unit, a memory coupled to said processing unit and a graphical user interface comprising of a display for displaying a user interface element and a touch screen for receiving input from a user. The memory is configured to store computer program code and a user interface data. The graphical user interface is coupled to said memory and data processing unit. The processing unit is configured to execute the program code stored in the memory, whereupon the apparatus is configured to display a user interface element on the display, open a menu structure on a side of the user interface element by a touch on the touch screen, wherein the menu structure comprises at least one menu option and a selection area and wherein said at least one menu option is movable in comparison to the selection area and activate a menu option that is closest to the selection area. The apparatus may be an example of a computing device.

The menu structure that is closest to the selection area is activated when the touch is detected to be released from the touch screen. The apparatus is further arranged to indicate an openable menu structure by a menu indicator on a side of the user interface element. According to an embodiment, the menu structure indicated by the menu indicator is opened when the detected touch is detected to move away from the menu indicator. The apparatus is further arranged to indicate movement of at least one menu option over the selection area by visual, audio and/or haptic feedback. The apparatus is further arranged to indicate the activation of the menu option from the menu structure by visual, audio and/or haptic feedback. The apparatus is further arranged to indicate a second menu indicator on a second side of the user interface element if a menu structure is available. According to an embodiment, the user interface element is a photo, a lock screen view or any other view of a terminal device, a web page, a calendar application or a list of phone numbers, phone history, bookmarks, dates, or photos of photo gallery. According to an embodiment, the menu option that is closest to the selection area is displayed, other menu options are invisible. The apparatus is further arranged to provide a feedback for the user when the menu option is activated. The apparatus is further arranged to lock the menu structure open and provide a feedback for the user when the end of the menu structure is reached. According to an embodiment, the feedback provided for the user when the end of the menu structure is reached is different than feedback provided for the user when the menu option is activated. According to an embodiment, the apparatus that is a computing device is a smart phone.

According to a third aspect of the invention, there is provided a computer program product, stored on a computer readable medium and executable in a data processing device comprising a graphical user interface comprising a display for displaying a user interface element and a touch screen for receiving input from a user. The computer program product comprises instructions to display a user interface element on the display, open a menu structure on a side of the user interface element by a touch on the touch screen, wherein the menu structure comprises at least one menu option and a selection area and wherein said at least one menu option is movable in comparison to the selection area and activate a menu option that is closest to the selection area and activate a menu option that is closest to the selection area.

The menu structure that is closest to the selection area is activated when the touch is detected to be released from the touch screen. The computer program product further comprises instructions to indicate an openable menu structure by a menu indicator on a side of the user interface element. According to an embodiment, the menu structure indicated by the menu indicator is opened when the detected touch is detected to move away from the menu indicator. The computer program product further comprises instructions to indicate movement of at least one menu option over the selection area by visual, audio and/or haptic feedback. The computer program product further comprises instructions to indicate the activation of the menu option from the menu structure by visual, audio and/or haptic feedback. The computer program product further comprises instructions to indicate a second menu indicator on a second side of the user interface element if a menu structure is available. According to an embodiment, the user interface element is a photo, a lock screen view or any other view of a terminal device, a web page, a calendar application or a list of phone numbers, phone history, bookmarks, dates, or photos of photo gallery. According to an embodiment, the menu option that is closest to the selection area is displayed, other menu options are invisible. The computer program product further comprises instructions to provide a feedback for the user when the menu option is activated. The computer program product further comprises instructions to lock the menu structure open and provide a feedback for the user when the end of the menu structure is reached. According to an embodiment, the feedback provided for the user when the end of the menu structure is reached is different than feedback provided for the user when the menu option is activated. According to an embodiment, the data processing device is a smart phone.

### Description of the Drawings

For a more complete understanding of example embodiments of the present invention, reference is now made to the following descriptions taken in connection with the accompanying drawings in which
- Fig. 1: shows an example of a portable computing device:
- Fig. 2: shows another example of a portable computing device according to an embodiment
- Figs. 3a-c: show views of a display of a touch screen apparatus according to an embodiment of the invention;
- Figs. 4a-b: show views of a display of a touch screen apparatus according to an embodiment of the invention;
- Figs. 5a-f: show views of a display of a smart phone having a touch screen according to an embodiment of the invention;
- Figs. 6a-b: show views of a display of a smart phone having a touch screen according to an embodiment of the invention
- Figs. 7a-b: show steps of selecting method by views of a display of a smart phone having a touch screen according to an embodiment of the invention;
- Figs. 8a-b: show views of a display of a smart phone having a touch screen according to an embodiment of the invention; and
- Fig. 9: shows a flow chart of a method for using a menu structure according to an embodiment of the invention.

### Detailed Description of the Invention

A touch screen is an electronic visual display of a terminal device that can detect the presence and location of a touch within the area of the display. Usually, users touch the touch screen of the device with a finger/fingers or a hand, or in some cases with a stylus. Nowadays, touch screens are more common in portable computing devices such as game consoles, all-in-one computers, tablet computers, smart phones, personal digital assistants (PDA), satellite navigation devices, mobile phones, and video games. There is a trend especially in smart phones to implement terminals with only few or no real hardware buttons. All or most of the functionalities are controlled with so called on-screen buttons, on-screen toolbars or software menu structures.

The touch screen enables the user to interact with the computing device of the device directly with what is displayed i.e. with on-screen buttons. The user selects, for example, by a finger, on-screen buttons, for example, displayed icons or keys. When the touch screen is used, no additional device is needed, i.e. there is no need for external hardware such as a mouse or a touchpad through which a pointer can be indirectly controlled, or an external keyboard. Touch screen displays are popular, for example, in personal electronics, in the medical field, in heavy industry, and in kiosks where keyboard and mouse systems do not allow a suitably intuitive, rapid, or accurate interaction by the user with the content on the display.

However, on-screen functionalities of touch screen devices, i.e. on-screen buttons, toolbars or software menu structures use some of the area of the display, thus limiting the amount of information which can be presented on the display for the user. Traditionally, this problem has been solved by increasing the screen size or by decreasing the size of information displayed on the screen. However, the larger screen size leads to larger manufacturing costs of the terminal, and the decreased size of presented information reduces the usability characteristics of the device.

Additionally, the use of touch screens of conventional portable computing devices with on-screen buttons, toolbars or software menu structures requires the user to look at the screen when using the touch screen and to tap exactly on the on-screen control places i.e. a defined area on the touch screen. This leads to another kind of usability problem. The device cannot be used in a safe manner while moving, driving or cycling etc. or in a comfortable manner while watching TV, discussing with other people or doing something that requires the use of eyes but leaves the hands free. For example, tapping and then moving out of the defined area of the on-screen control normally discards the started action. In addition, existing touch screen devices give little or no possibilities to be used by visually impaired people, because it might be impossible or at least hard to find on-screen control locations on the touch screen. In addition, the screen size in some of the devices might be dimensioned in a way that it is not possible to reach on-screen buttons with one hand or without moving the device within the user's hand.

These problems can be solved by a graphical user interface of a computing device, wherein menu structures comprising menu options such as actions and toolbar items can be opened and scrolled via a touch interface such as a touch screen by an upward and/or downward and/or leftward and/or rightward movement of a finger of a user, and wherein menu options can be selected by releasing the finger when a menu option is within a selection area of the menu structure. Releasing of the finger activates the menu option that is within the selection area, and the menu structure may collapse using spring animation. In the other words, an upward, downward, leftward or rightward movement of the finger opens the menu structure indicated by a menu indicator on the edge of a user interface element; i.e., the movement of the finger away from the menu indicator opens the menu structure. For example, the menu opens when the user scrolls up (moves the finger down) when a top menu indicator is shown on the top of the screen i.e. above the user interface element, or scrolls down when a bottom menu indicator is shown on the bottom of the screen i.e. under the user interface element, or scrolls left when a left menu indicator is shown on the left side of the screen i.e. on the left side of the user interface element or scrolls right when a right menu indicator is shown on the right side of the screen i.e. on the right side of the user interface element. The computing device may be a computer, such as a smart phone, having a touch screen and running an operating system, such as Linux, iOS or Android, or some other computing device or portable computing device with a touch screen, such as a game console, an all-in-one computer, a tablet computer, a personal digital assistant (PDA), a satellite navigation device, a mobile phone, or a video game. The user interface element may be, for example, a photo, a lock screen view or any other view of a terminal device, a web page, a calendar application or any other application of a terminal device, a list of, for example, phone numbers, phone history, bookmarks, dates, photos of photo gallery, etc. Here the term "on the side of a user interface element" refers to a top border area, a bottom border area, a left border area and/or a right border area of the user interface element.

According to another embodiment, it is also possible to open a menu structure in the middle of the user interface element, for example, in the middle of the list of lit items by dragging list items from both sides of the intermediate menu indicator by two fingers when a menu structure is available in the middle of the list and indicated by the intermediate menu indicator. Here the term middle of the user interface element refers to a place that is not in the border area of the user interface element, for example, in the beginning or in the end of the list.

According to another embodiment, indicators can be shown on all sides of the user interface element at the same time or on two or three or four sides at the same time, for example, in case of moving a web page on the screen. When the top, the bottom, a side; left end or right end, is reached, a menu corresponding menu indicator, top menu indicator, bottom menu indicator, left menu indicator or right menu indicator, can be open and shown.

According to another embodiment, there may be one or more openable menu structures on the different sides of a user interface element that are not indicated by an indicator. According to another embodiment, one or more menu structures are indicated by the indicator and one or more are not. For example, a menu structure on the top side of a user interface element is not indicated by an indicator, but another menu structure on the left side of a user interface element is indicated by a left menu indicator.

Further, according to another embodiment, a menu indicator can be provided at any arbitrary point of any user interface element if there is scrollable content (menu structure) in context with the menu indicator.

Menu structures according to the invention include a selection area for selecting menu options of the menu structure. The desired menu option can be arranged to the selection area by a scrolling action. Scrolling of the menu options over the selection area and selection of a menu option from the menu structure may cause visual, audio and/or haptic feedback for the user. It is also possible, that the apparatus reads the menu options and/or the selected menu option.

Menu options of a menu structure may be associated with actions such as making a phone call, launching a keypad, sending a message, modifying an item, playing music, going to previous page (when using the menu in browser environment), going to next page, entering Uniform Resource Locator, previous pages in web browsing, starting another application, closing current application, saving status, toggling to other application, etc. There can also be additional info relating to the displayed content, like week days on Calendar view, metadata of photos etc. The menu options may relate to an application that is run by the apparatus, and those options may be default options that are prearranged into menu structures. However it is also possible that the user may select his/her own menu options for each application or views of the apparatus.

However, the common feature for all openings of menu structures indicated by menu indicators and selecting menu options from the menu structure is that there is no need to touch a certain place on the touch screen. It is sufficient to touch the screen and to move the touch (finger) in the desired direction.

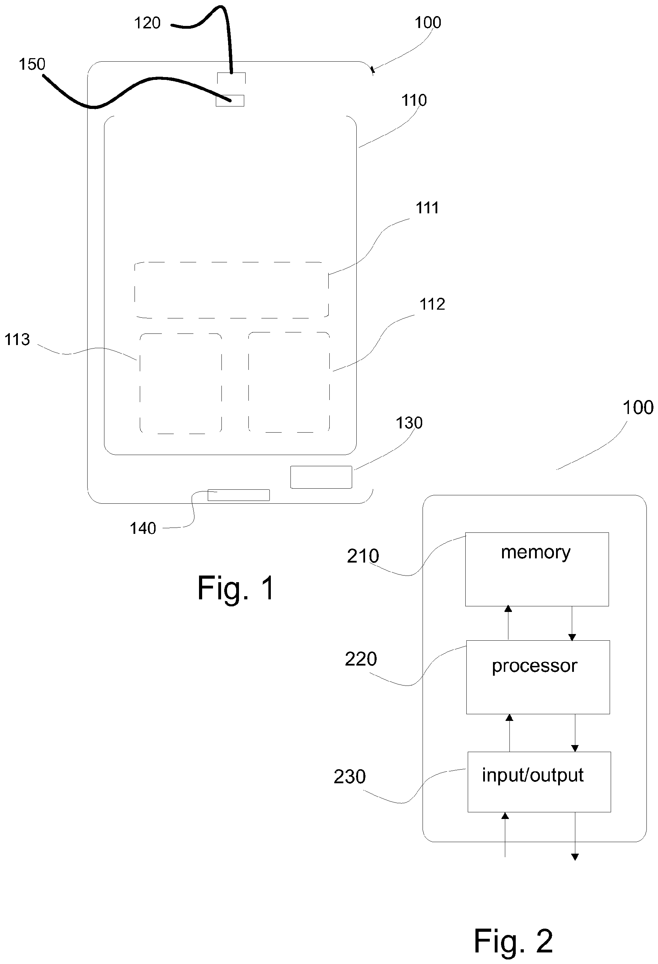

An example embodiment of the present invention and its potential advantages are understood by referring to figures 1 through 9 of the drawings.

Figure 1 shows an example of an apparatus 100. The apparatus 100 comprises a display 110, which is a touch-screen display (e.g. capacitive, resistive) configured to display a user interface view and receive input from a user.

The apparatus according to Figure 1 further comprises at least one camera 120 being situated on same side of the apparatus with the display, or on the opposite side. According to an embodiment, the apparatus comprises two cameras placed on opposite sides of the apparatus 100, e.g. front side (i.e. display side) and rear side of the apparatus. The apparatus 100 may have one or more physical buttons 130 and one or more touch-screen buttons 112, 113. The apparatus 100 comprises a keypad being provided either on the display as a touch-screen keypad 111 or on the housing of the apparatus 100 as a physical keypad. The apparatus 100 may further comprise a microphone 140 and loudspeaker 150 to receive and to transmit audio. The apparatus 100 may also comprise communication interface (not shown in Figure 1) configured to connect the apparatus to another device, e.g. a server or a terminal, via wireless and/or wired network, and to receive and/or transmit data by said wireless/wired network. Wireless communication can be based on any cellular or non-cellular technology, for example GSM (Global System for Mobile communication), WCDMA (Wideband Code Division Multiple Access), CDMA (Code Division Multiple Access). Wireless communication can also relate to short range communication such as Wireless Local Area Network (WLAN), Bluetooth etc. The apparatus 100 also comprises a battery or similar powering means. The apparatus 100 may comprise one or more sensors, such as accelerometer, gyroscope, magnetometer etc. The apparatus 100 may also comprise a vibrator for providing movement of the apparatus in silent mode and for providing tactile feedback in user interface situations.

The apparatus 100 further comprises a memory (Figure 2: 210) configured to store computer program code used for operating the apparatus and for providing user interface, and to store user interface data. User interface related software can be implemented as separate application and/or it can be part of the operating system of the apparatus. User interface may include default values and it may include values which can be modified by the users. The apparatus 100 comprises a processor 220 that executes the program code to perform the apparatus' functionality. The apparatus further comprises an input/output element 230 to provide e.g. user interface views to a display (Figure 1: 110) of the apparatus, or audio via loudspeaker (Figure 1: 150) and to receive user input through input elements, such as buttons (Figure 1: 111, 112, 113, 130), microphone (Figure 1: 140) or camera (Figure 1: 120). The input buttons can be used by fingers, stylus, touch pad, mouse, joystick, etc.

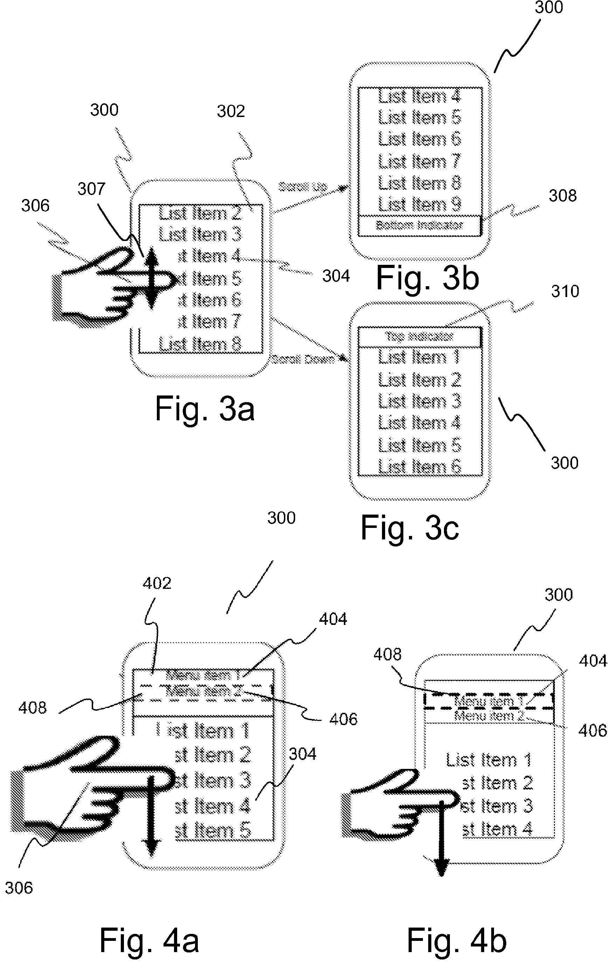

Figure 3a shows a view of a display of a touch screen apparatus according to an embodiment of the invention. The apparatus 300 has a graphical user interface 302 comprising the display for displaying a user interface view and information, and a touch screen for receiving input from a user. The touch screen may be controlled, for example, with a finger 306. In this embodiment there is disclosed a general list 304 as the user interface element. The list 304 comprises 9 list items; List items 1 to 9. The list items may be for example phone numbers from the phone directory of the phone, links from a web site, photos of a photo gallery, emails of an email service, calendar marks of calendar application, or any other items which relate to each other in some way and which are suitable to be shown as a list. As shown by a bidirectional arrow 307 in figure 3a, the user may scroll the list 304 up or down by the finger 306.

Figure 3b shows a view of a display of a touch screen apparatus according to an embodiment of the invention, where the user has scrolled up the list 304 of figure 3a by moving the finger 306 upwards on the user interface 302. When the last item (in this case List Item 9) of the list 304 is reached by moving the finger 306 upwards, a menu indicator 308 is displayed under the list items of the list 304 on the user interface 302. In this embodiment the menu indicator 308 may be called a bottom indicator.

Figure 3c shows a view of a display of a touch screen apparatus according to an embodiment of the invention, where the user has scrolled down the list 304 of figure 3a by moving the finger 306 downwards on the user interface 302. When the first item (in this case List Item 1) of the list 304 is reached by moving the finger 306 downwards, a menu indicator 310 is displayed above the list items of the list 304 on the user interface 302. In this case the menu indicator 310 may be called a top indicator.

The menu indicators 308, 310 may be, for example, graphical elements, such as an illuminated line, a special coloured line, a glow etc. which is shown, for example, on the top or bottom of the screen.

Figures 4a-b show views of a screen of a touch screen apparatus 300 according to an embodiment of the invention, where the user has further scrolled up the list 304 with the finger 306, i.e. moved the finger down after the list 304 has ended, and the menu indicator has displayed above the list items of the list 304 on the user interface 302 (menu indicator is shown in figure 3c) so that a pull-down menu 402 will appear above the list items of the list 304, i.e. the list 304 moves downwards so that the menu 402 may be shown above the first list item (List Item 1). The menu 402 may comprise menu options. This embodiment comprises two menu options, Menu Item 1 404 and Menu Item 2 406. However, there may also be only one item or more than two menu items, for example, three, four or more.

The menu 402 may have a defined selection area, i.e. a zone 408. The selection area 408 may be visually indicated,, for example, by a graphical element, such as an illuminated line, a special coloured line, a special coloured menu option text, a glow or by a dashed line as in figure 4a etc. However, it is also possible, that the selection area 408 is non-visible for the user or that the device gives audio and/or haptic feedback for the user when a menu option is within the selection area. Preferably, the position of the area 408 does not move in relation to the display of the apparatus 300 when the menu 402 is scrolled. The area 408 may have a configurable parameter, such as distance (in pixels) from top of the screen, and also the width, i.e. height of the zone may have a configurable parameter, such as amount of pixels. When the user moves his/her finger 306 further downwards, menu items of the menu 406 will pass through the selection area 408. When menu items move within or through the selection area 408, the apparatus 300 may cause visual, audio and/or haptic feedback for the user. Thus, the user knows when the first menu item 404 is suitable to be selected e.g. within the area 408, and when the second menu item 406 is suitable to be selected, and so on. For example, on the basis of a number of received feedbacks the user knows which menu item is in order within the selection area 408 and thus selectable by releasing the finger 306 from the touch screen. The menu item closest to said zone 408 is the item which would be selected if the user releases the finger from the touch screen: For example, in figure 4a the Menu item 2 406 will be selected, and in figure 4b the Menu item 1 404 will be selected. The selection of the menu item from the menu 408 may also cause visual, audio and/or haptic feedback for the user. This feedback, menu item in the selection zone and selection done, may be different. If the pull-down menu is expanded as long as it could be expanded by moving the finger further down when menu options of the menu 402 are ended, the menu 402 may be locked, allowing user to tap by the finger 306 to activate a menu option. The locking of the menu 402 may be indicated to user by a different audio or haptic (vibra) feedback compared to the menu item being within the selection area. When the menu 402 is locked the selection area 408 indicator may disappear. Additionally end of the menu list may be indicated, for example, by dimming the menu, changing colour of text of menu items, or by changing background colour of menu items.

In addition, it is also possible that when the user scrolls the list 404 down with the finger 306, i.e. moves the finger 306 up after the list 404 has ended, a pull-down menu appears under the list items of the list 404; i.e. the list 404 moves upwards so that the menu 402 may be shown under the last list item (List Item 9). The menu 402 may comprise the same or different menu options as the above mentioned pull-down list above the menu 402. In the pull-down menu, under the list items of the list 404 there is also a selection area. The number of menu items in the pull-down menu is not restricted.

Thus, the above mentioned ways of displaying menu options give a possibility to select menu items in fast manner and without touching a certain place on the touch screen. In a preferred embodiment, the apparatus indicates, for example, by audio or by vibrating, that a menu item is within a zone 408, thus enabling the user to activate menu options without looking at the display. In addition, the apparatus may also indicate the selection of this menu option.

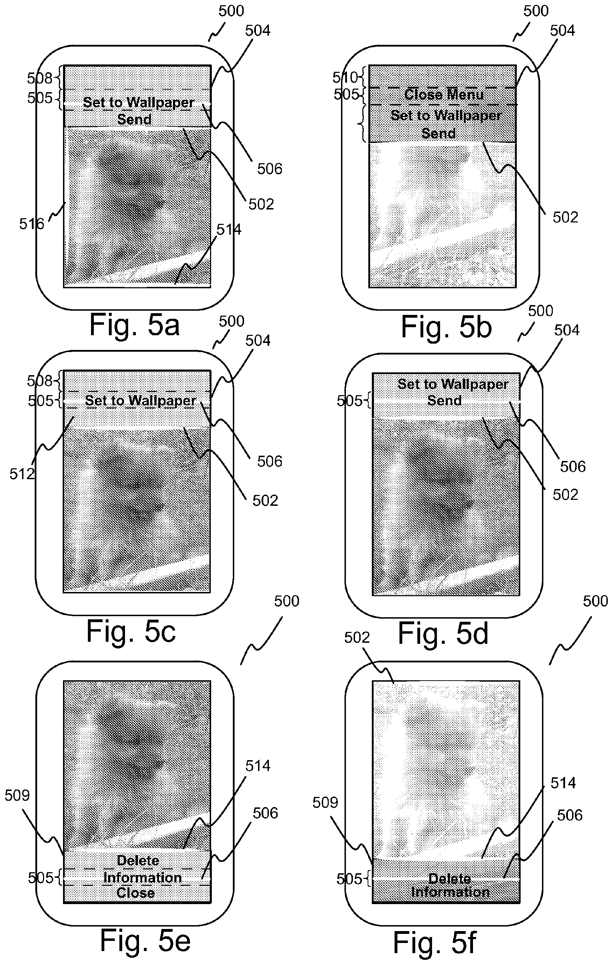

Figures 5a-f show views of a display of a smart phone having a touch screen according to an embodiment of the invention. The smart phone 500 has a graphical user interface comprising the display for displaying a user interface view and information and a touch screen for receiving input from a user.

Figure 5a shows an embodiment where a photo is displayed as a user interface element on the display of a smart phone 500. In the display, menu indicators, top menu indicator 502 and down menu 514 and left side indicator 516 are also displayed, indicating that there are menu structures to be used. The user has to move down the finger at some point on the touch screen and opened a pull-down menu 504 indicated by the top menu indicator 502. The photo is shrunk so that the menu 504 can be shown. Alternatively, the photo can be shifted so that the menu can be shown, for example, the photo may be shifted downward, upward, leftward or rightward depending on the opening direction of the menu. The menu 504 displays two menu options, Send option and Set to Wallpaper option. There is also indicated a selection area 505 by dashed lines and also by an illuminated line 506. The Set to Wallpaper option is within the selection area 505. There is also an empty space in the menu 504. In this embodiment, this empty space is a so called Close Menu option 508. If the Close Menu option 508 is within the selection area 505 when the user releases his/her finger from the touch screen, the menu 502 will be closed. It is also possible to show the name of this Close Menu option 508.

Figure 5b shows an embodiment where a photo is displayed on the display of the smart phone 500. On the display, a menu indicator 502 is also displayed, indicating that there is a pull-down menu structure on top of the screen to be used. The user has to move down the finger on the touch screen and opened the pull-down menu 504 indicated by the top menu indicator 502. The menu 504 is displayed translucently on top of the displayed photo. The menu 504 comprises three menu options, Send option, Set to Wallpaper option and Close Menu Option. A selection area 505 is also indicated by dashed lines. The Close Menu option is within the selection area 505. There is also an empty space 510 above menu options in the menu 504. In this embodiment, this empty space locks the menu 504 if the empty space is within the selection area 505 so the user may tap by the finger 306 to activate a menu option. However, it is also possible that menu 504 is displayed non-translucently on top of the displayed photo or on top of displayed on-going action. The on-going action may be, for example, a phone call, Internet browser application, web application, messaging application such as email, photo sharing application, multimedia messaging service application, short message service application etc.

Figure 5c shows an embodiment of the invention where a photo is displayed on the display of the smart phone 500. In this embodiment only the menu option which is within the selection area 505 is shown. Thus only Set to Wallpaper option is shown, but Close Menu 508 and Send 512 options are not shown. However, when the finger is moved further down, the Set to Wallpaper option will disappear and the Close Menu Option 508 will be shown. However, it is also possible that all menu options are shown but the one which is within the selection area 505 is highlighted with a certain colour or some other indicator.

Figure 5d shows an embodiment where a photo is displayed on the display of the smart phone 500. In this embodiment the selection area 505 is only displayed by an illuminated line 506. In this embodiment, when the user releases the finger when the "Send" option is within the selection area 505 a new menu options might be presented or messaging application such as email, photo sharing application, or multimedia messaging service application might be launched depending on settings.

Figure 5e shows an embodiment where a photo is displayed on the display of the smart phone 500. On the display, a menu indicator 514 is also displayed which indicates that there is a menu structure to be used. The user has moved up the finger on the touch screen and opened a pull-down menu 509 indicated by the down menu indicator 514. The photo is shrunk so that the menu 504 can be shown under the photo. Additionally the photo can be moved upward so that the photo is shown only partially. The menu 509 displays three menu options, Delete option, Information option and Close option. A selection area 505 is also indicated by dashed lines and also by an illuminated line 506. The Information option is currently within the selection area 505.

Figure 5f shows an embodiment where a photo is displayed on the display of the smart phone 500. On the display, two menu indicators, top menu indicator 502 and down menu indicator 514 are also displayed, indicating that there are menu structures to be used. The user has moved up the finger on the touch screen and opened a pull-down menu 509 indicated by the down menu indicator 514. The menu 509 is displayed translucently on top of the displayed photo. There are three menu options displayed on the menu 509, Delete option, Information option and Close option. A selection area 505 is indicated by an illuminated line 506. The Delete option is currently within the selection area 505.

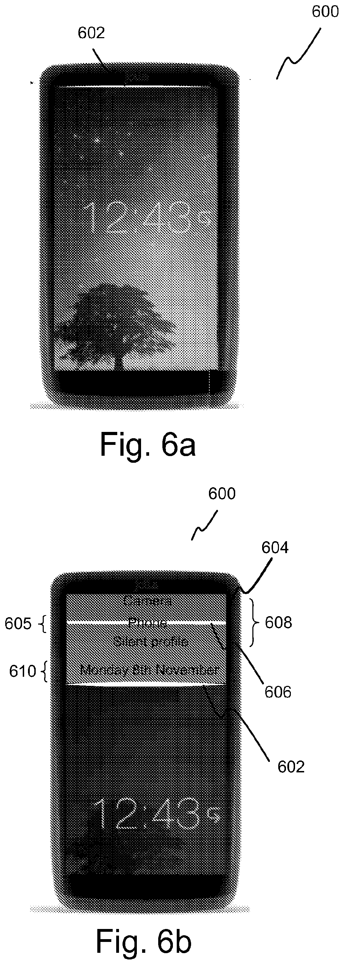

Figures 6a and 6b show views of a display of a smart phone having a touch screen according to an embodiment of the invention. The smart phone 600 has a graphical user interface comprising the display for displaying a user interface view and information, and a touch screen for receiving input from a user.

Figure 6a shows an embodiment where a lock screen view is displayed on the display of the smart phone 600. On the display, a menu indicator and a top menu indicator 602 are also displayed, indicating that there are menu structures to be used.

Figure 6b shows an embodiment where a lock screen view is displayed as a user interface element on the display of the smart phone 600. On the display, a pull down menu 604 that has been indicated by the top menu indicator 602 is also displayed. The user has opened the pull-down menu 604 by moving down the finger at some point on the touch screen. The menu 604 displays three menu options 608 in this view: Silent profile, Phone and Camera options. There is also indicated an additional information area 610 comprising information about the date. This additional information may also be a menu option that starts a calendar application. The selection area 605 is indicated by an illuminated line 606, and the Phone option is currently within the selection area 605.

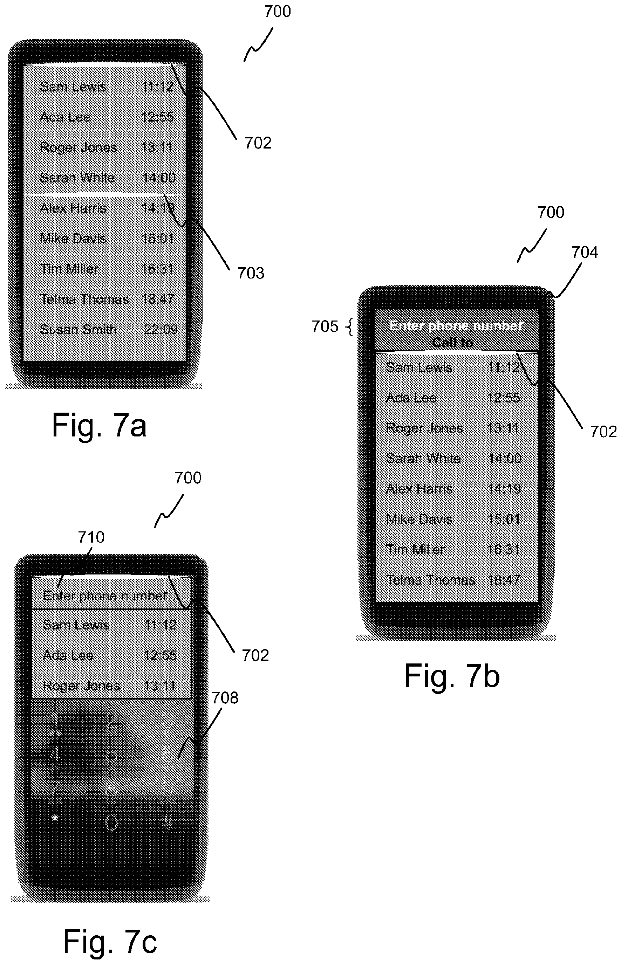

Figures 7a, 7b and 7c show steps of a method for selecting a menu option by views of a display of a smart phone 700 having a touch screen according to an embodiment of the invention. The apparatus 700 has a graphical user interface comprising the display for displaying a user interface view and information, and a touch screen for receiving input from a user. Figure 7a shows a main view as a user interface element on the display of the smart phone. On the main view, a phone history list, a top menu indicator 702 and an intermediate menu indicator 703 are shown. In figure 7b, the user has opened the menu 704 relating to the top menu indicator 702 by moving down a finger at some point on the touch screen. The menu 704 comprises at least two menu options, and two of them are shown, Enter phone number and Call to. A selection area 705 is indicated to the user by highlighting the menu option (Call to) within the selecting area 705 with white colour i.e. colour of the font of the menu option is changed. In figure 7c, the user has selected the Call to menu option by releasing the finger from the touch screen while the Call to menu option was within the selecting area 705. After selection of menu option, the menu 704 is closed and the selected menu option is activated. In this embodiment, activation of Call to menu option launches a phone number dial pad 708 and opens an area for a phone number to be entered 710. Different menu options activate different applications.

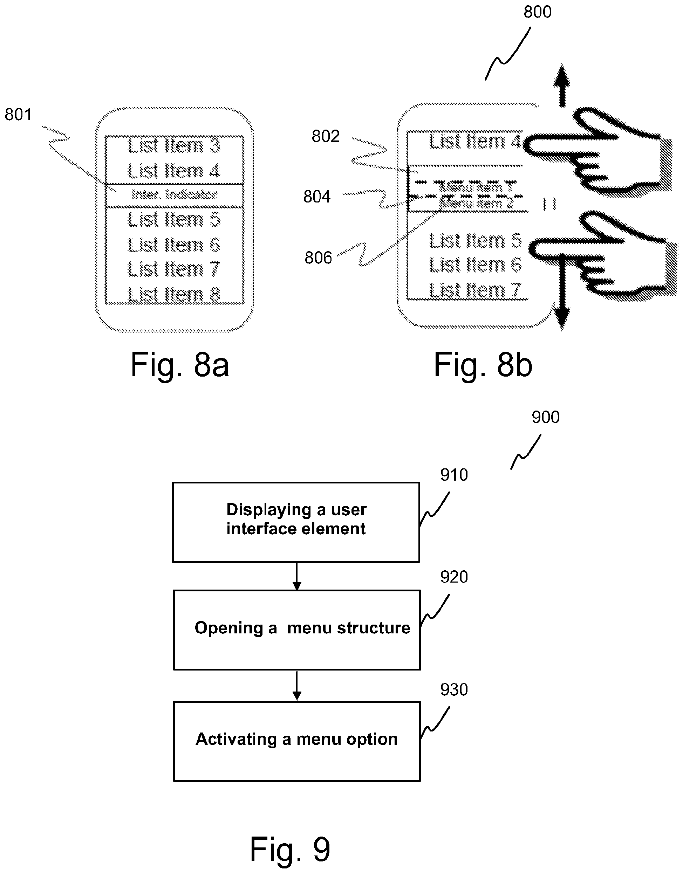

Figures 8a and 8b show a generic overview of the user interface views of a display of a computing apparatus having a touch screen according to an embodiment of the invention. The apparatus 800 has a graphical user interface comprising the display for displaying a user interface view and information, and a touch screen for receiving input from a user.

In an embodiment shown in figure 8a, a general list is disclosed as a user interface element comprising list items. A menu indicator as an intermediate menu indicator 801 is displayed below the List Item 4, i.e. in the middle of the list. The intermediate menu indicator 801 indicates that there is scrollable content i.e. pull-down menu relating to the above list item, List Item 4. The user of the apparatus may open the pull-down menu by dragging list items from both sides of the intermediate menu indicator 801 by two fingers.

In an embodiment shown in figure 8b, the view of figure 8b is displayed after opening of the pull-down menu 802 indicated by the intermediate menu indicator 801. The pull-down menu 802 comprises menu options, Menu Option 1 804 and Menu Option 2 806. Menu option is again selectable when it is within a selecting area, this selection method is mentioned in context with earlier figures.

Alternatively, in figure 8a, the list item or items above intermediate menu indicator 801 could be static such as avatars, pictures, titles or other static information. When above list item or items are static the user can open the intermediate menu by one finger by moving the finger down below the intermediate indicator. In this alternative embodiment List Item 3 and List Item 4 would stay stationary and the menu would appear i.e. open below the intermediate menu indicator 801.
Figure 9 shows a flow chart of a method 900 for using a menu structure according to an embodiment of the invention. The method 900 can be executed, e.g. by a computing device having a graphical user interface comprising the display for displaying a user interface view and a touch screen for receiving input from a user, wherein the method comprises. The computing device may be, for example, a smart phone. In step 910, a user interface element is displayed on the display. In step 920, a menu structure is opened by a touch on the touch screen, wherein the menu structure comprises at least one menu option and a selection area and wherein said at least one menu option is movable in comparison to the selection area, the movement of at least one menu option can be back and forth movement over the selection area. The touch may be moving on said touch screen. Usually, the menu structure comprises at least two menu options. And in step 930, a menu option that is closest to the selection area is activated.
The options and features of one embodiment may also be used in context with other embodiments, for example, options and features shown in embodiment of figure 5a may be used in context with embodiments of figures 5b-5e.

According to a further embodiment, top menu and bottom menu indicators and menu structures can also be used in Internet browser applications. For example, when user is in the top part of a web page a top menu indicator is shown or when the user scrolls the HTML (Hyper Text Markup Language) document down menu items relevant for web browsing can be shown. Shown items can be, for example, "Enter URL" (Universal Resource Locator), "Go back", "Bookmark", "Share the page" etc.

According to further embodiments, information content of a web page (as defined in HTML or similar file) can include instructions on what menu options should be in menu structures according to the invention and downloadable applications may contain menu structures and indicators according to the invention.

The term "on the side of a user interface element" refers to a top border area, a bottom border area, a - left border area and/or a right border area of the user interface element. According to a further embodiment when the menu indicators are on left or right edge / side of the display the menus might be scrollable from left to right or from right to left.

The various embodiments of the invention can be implemented with the help of computer program code that resides in a memory and causes an apparatus to carry out the invention. For example, the apparatus that is a computing device may comprise circuitry and electronics for handling, receiving and transmitting data, a computer program code in a memory, and a processor which, when running the computer program code, causes the apparatus to carry out the features of an embodiment.

It is obvious that the present invention is not limited solely to the above-presented embodiments, but it can be modified within the scope of the appended claims.

## Claims

1. A method for a computing device (100) having a graphical user interface (302) comprising a display (110) for displaying a user interface view and a touch screen for receiving input from a user, wherein the method comprises:
displaying (910) a user interface element on the display (110); indicating an openable menu structure by a menu indicator (308) on a side of the user interface element;
opening (920) the menu structure on the side of the user interface element by a touch on an arbitrary point on the touch screen, wherein the menu structure comprises at least one menu option (404, 406) and a selection area (408) and wherein said at least one menu option (404, 406) is movable in comparison to the selection area (408);
moving at least one menu option in response to the touch moving away from the menu indicator;
indicating the movement of the at least one menu option over the selection area (408) by visual, audio and/or haptic feedback;
activating the menu option that is closest to the selection area (408) when the touch is detected to be released from the touch screen;
indicating the activation of the menu option from the menu structure by visual, audio and/or haptic feedback;
and
locking the menu structure open and providing a feedback for the user when the end of the menu structure is reached, and activating a menu option in response to a tap on said menu option.

2. The method according to claim 1, wherein the menu structure indicated by the menu indicator (308, 310) is opened when the detected touch is detected to move away from the menu indicator (308, 310).

3. The method according to any of the previous claims 1 to 2, wherein the user interface element is a photo, a lock screen view or any other view of a terminal device, a web page, a calendar application or a list of phone numbers, a phone history, bookmarks, dates, or photos of a photo gallery.

4. The method according to any of the previous claims 1 to 3, wherein the menu option (404, 406) that is closest to the selection area (408) is displayed and other menu options are invisible.

5. The method according to claim 1, wherein the feedback provided for the user when the end of the menu structure is reached is different than the feedback provided for the user when the menu option is activated.

6. An apparatus (100) comprising a processing unit (220), a memory (210) coupled to said processing unit (220) and a graphical user interface (302) comprising a display (110) for displaying a user interface element and a touch screen for receiving input from a user, said memory (210) configured to store computer program code and a user interface data, and wherein said graphical user interface (302) is coupled to said memory (210) and data processing unit (220) wherein the processing unit (220) is configured to execute the program code stored in the memory (210), whereupon the apparatus (100) is configured to
display (910) a user interface element on the display (110); indicate an openable menu structure by a menu indicator (308) on a side of the user interface element;
open (920) the menu structure on the side of the user interface element by a touch on an arbitrary point on the touch screen, wherein the menu structure comprises at least one menu option (404, 406) and a selection area (408) and wherein said at least one menu option (404, 406) is movable in comparison to the selection area (408); move at least one menu option in response to the touch moving away from the menu indicator;
indicate the movement of the at least one menu option over the selection area (408) by a visual, audio and/or haptic feedback;
activate the menu option that is closest to the selection area (408) when the touch is detected to be released from the touch screen;
indicate the activation of the menu option from the menu structure by visual, audio and/or haptic feedback;
and
lock the menu structure open and provide a feedback for the user when the end of the menu structure is reached, and activate a menu option in response to a tap on said menu option.

7. The apparatus according to claim 6, wherein the user interface element is a photo, a lock screen view or any other view of a terminal device, a web page, a calendar application or a list of phone numbers, a phone history, bookmarks, dates, or photos of a photo gallery.

8. The apparatus according to any of the previous claims 6 to 7, wherein the apparatus is a smart phone (500; 600; 700).

9. A computer program product, stored on a computer readable medium and executable in a computing device comprising a graphical user interface (302) comprising a display (110) for displaying a user interface element and a touch screen for receiving input from a user, wherein the computer program product comprises instructions to:
display (910) a user interface element on the display (110); indicate an openable menu structure by a menu indicator (308) on a side of the user interface element;
open (910) the menu structure on the side of the user interface element by a touch on an arbitrary point on the touch screen, wherein the menu structure comprises at least one menu option (404, 406) and a selection area (408) and wherein said at least one menu option (404, 406) is movable in comparison to the selection area (408);
move at least one menu option in response to the touch moving away from the menu indicator;
indicate the movement of the at least one menu option over the selection area (408) by a visual, audio and/or haptic feedback;
activate the menu option that is closest to the selection area (408) when the touch is detected to be released from the touch screen;
indicate the activation of the menu option from the menu structure by visual, audio and/or haptic feedback;
and
lock the menu structure open and provide a feedback for the user when the end of the menu structure is reached, and activate a menu option in response to a tap on said menu option.

10. The computer program product according to claim 9, wherein the menu option (404, 406) that is closest to the selection area (408) is displayed, other menu options are invisible and/or the feedback provided for the user when the end of the menu structure is reached is different than the feedback provided for the user when the menu option is activated.

11. The computer program product according to any of the previous claims 9 to 10, wherein the computing device is a smart phone (500; 600; 700).

## Patentansprüche

1. Verfahren für eine Berechnungsvorrichtung (100) mit einer grafischen Benutzerschnittstelle (302), umfassend eine Anzeige (110) zum Anzeigen einer Benutzerschnittstellenansicht und einen Berührungsbildschirm zum Empfangen einer Eingabe von einem Benutzer, wobei das Verfahren umfasst:
Anzeigen (910) eines Benutzerschnittstellenelements auf der Anzeige (110);
Angeben einer öffenbaren Menü-Struktur durch einen Menü-Indikator (308) auf einer Seite des Benutzerschnittstellenelements;
Öffnen (920) der Menü-Struktur auf der Seite des Benutzerschnittstellenelements durch eine Berührung einer willkürlichen Stelle auf dem Berührungsbildschirm, wobei die Menü-Struktur mindestens eine Menü-Option (404, 406) und einen Auswahlbereich (408) umfasst und wobei die mindestens eine Menü-Option (404, 406) im Vergleich zu dem Auswahlbereich (408) bewegbar ist;
Bewegen mindestens einer Menü-Option als Reaktion darauf, dass sich die Berührung von dem Menü-Indikator weg bewegt;
Angeben der Bewegung der mindestens einen Menü-Option über dem Auswahlbereich (408) durch eine visuelle, Audio- und/oder haptische Rückmeldung;
Aktivieren der Menü-Option, die dem Auswahlbereich (408) am nächsten ist, wenn erfasst wird, dass die Berührung von dem Berührungsbildschirm abgezogen wird;
Angeben der Aktivierung der Menü-Option von der Menü-Struktur durch eine visuelle, Audio- und/oder haptische Rückmeldung;
und
Sperren der Menü-Struktur im geöffneten Zustand und Bereitstellen einer Rückmeldung für den Benutzer, wenn das Ende der Menü-Struktur erreicht wird, und Aktivieren einer Menü-Option als Reaktion auf ein Tippen auf die Menü-Option.

2. Verfahren nach Anspruch 1, wobei die Menü-Struktur, die von dem Menü-Indikator (308, 310) angegeben wird, geöffnet wird, wenn erfasst wird, dass sich die erfasste Berührung von dem Menü-Indikator (308, 310) weg bewegt.

3. Verfahren nach einem der vorhergehenden Ansprüche 1 bis 2, wobei es sich bei dem Benutzerschnittstellenelement um ein Foto, eine Sperrbildschirmansicht oder eine beliebige andere Ansicht einer Endgerätevorrichtung, eine Webseite, eine Kalenderanwendung oder eine Liste von Telefonnummern, eine Telefonkontakthistorie, Lesezeichen, Daten oder Fotos einer Fotogalerie handelt.

4. Verfahren nach einem der vorhergehenden Ansprüche 1 bis 3, wobei die Menü-Option (404, 406), die dem Auswahlbereich (408) am nächsten ist, angezeigt wird und andere Menü-Optionen nicht sichtbar sind.

5. Verfahren nach Anspruch 1, wobei die Rückmeldung, die für den Benutzer bereitgestellt wird, wenn das Ende der Menü-Struktur erreicht wird, sich von der Rückmeldung unterscheidet, die für den Benutzer bereitgestellt wird, wenn die Menü-Option aktiviert wird.

6. Gerät (100), umfassend eine Verarbeitungseinheit (220), einen Speicher (210), der an die Verarbeitungseinheit (220) gekoppelt ist, und eine grafische Benutzerschnittstelle (302), umfassend eine Anzeige (110) zum Anzeigen eines Benutzerschnittstellenelements und einen Berührungsbildschirm zum Empfangen einer Eingabe von einem Benutzer, wobei der Speicher (210) dazu konfiguriert ist, Computerprogrammcode und einen Benutzerschnittstellendatensatz zu speichern, und wobei die grafische Benutzerschnittstelle (302) an den Speicher (210) und die Datenverarbeitungseinheit (220) gekoppelt ist, wobei die Verarbeitungseinheit (220) dazu konfiguriert ist, den Programmcode, der in dem Speicher (210) gespeichert ist, auszuführen, woraufhin das Gerät (100) konfiguriert ist zum
Anzeigen (910) eines Benutzerschnittstellenelements auf der Anzeige (110);
Angeben einer öffenbaren Menü-Struktur durch einen Menü-Indikator (308) auf einer Seite des Benutzerschnittstellenelements;
Öffnen (920) der Menü-Struktur auf der Seite des Benutzerschnittstellenelements durch eine Berührung einer willkürlichen Stelle auf dem Berührungsbildschirm, wobei die Menü-Struktur mindestens eine Menü-Option (404, 406) und einen Auswahlbereich (408) umfasst und wobei die mindestens eine Menü-Option (404, 406) im Vergleich zu dem Auswahlbereich (408) bewegbar ist;
Bewegen mindestens einer Menü-Option als Reaktion darauf, dass sich die Berührung von dem Menü-Indikator weg bewegt;
Angeben der Bewegung der mindestens einen Menü-Option über dem Auswahlbereich (408) durch eine visuelle, Audio- und/oder haptische Rückmeldung;
Aktivieren der Menü-Option, die dem Auswahlbereich (408) am nächsten ist, wenn erfasst wird, dass die Berührung von dem Berührungsbildschirm abgezogen wird;
Angeben der Aktivierung der Menü-Option von der Menü-Struktur durch eine visuelle, Audio- und/oder haptische Rückmeldung;
und
Sperren der Menü-Struktur im geöffneten Zustand und Bereitstellen einer Rückmeldung für den Benutzer, wenn das Ende der Menü-Struktur erreicht wird, und Aktivieren einer Menü-Option als Reaktion auf ein Tippen auf die Menü-Option.

7. Gerät nach Anspruch 6, wobei es sich bei dem Benutzerschnittstellenelement um ein Foto, eine Sperrbildschirmansicht oder eine beliebige andere Ansicht einer Endgerätevorrichtung, eine Webseite, eine Kalenderanwendung oder eine Liste von Telefonnummern, eine Telefonkontakthistorie, Lesezeichen, Daten oder Fotos einer Fotogalerie handelt.

8. Gerät nach einem der vorhergehenden Ansprüche 6 bis 7, wobei das Gerät ein Smartphone (500; 600; 700) ist.

9. Computerprogrammprodukt, das auf einem computerlesbaren Medium gespeichert und in einer Berechnungsvorrichtung, umfassend eine grafische Benutzerschnittstelle (302), umfassend eine Anzeige (110) zum Anzeigen eines Benutzerschnittstellenelements und einen Berührungsbildschirm zum Empfangen einer Eingabe von einem Benutzer, ausführbar ist, wobei das Computerprogrammprodukt Anweisungen umfasst zum:
Anzeigen (910) eines Benutzerschnittstellenelements auf der Anzeige (110);
Angeben einer öffenbaren Menü-Struktur durch einen Menü-Indikator (308) auf einer Seite des Benutzerschnittstellenelements;
Öffnen (910) der Menü-Struktur auf der Seite des Benutzerschnittstellenelements durch eine Berührung einer willkürlichen Stelle auf dem Berührungsbildschirm, wobei die Menü-Struktur mindestens eine Menü-Option (404, 406) und einen Auswahlbereich (408) umfasst und wobei die mindestens eine Menü-Option (404, 406) im Vergleich zu dem Auswahlbereich (408) bewegbar ist;
Bewegen mindestens einer Menü-Option als Reaktion darauf, dass sich die Berührung von dem Menü-Indikator weg bewegt;
Angeben der Bewegung der mindestens einen Menü-Option über dem Auswahlbereich (408) durch eine visuelle, Audio- und/oder haptische Rückmeldung;
Aktivieren der Menü-Option, die dem Auswahlbereich (408) am nächsten ist, wenn erfasst wird, dass die Berührung von dem Berührungsbildschirm abgezogen wird;
Angeben der Aktivierung der Menü-Option von der Menü-Struktur durch eine visuelle, Audio- und/oder haptische Rückmeldung;
und
Sperren der Menü-Struktur im geöffneten Zustand und Bereitstellen einer Rückmeldung für den Benutzer, wenn das Ende der Menü-Struktur erreicht wird, und Aktivieren einer Menü-Option als Reaktion auf ein Tippen auf die Menü-Option.

10. Computerprogrammprodukt nach Anspruch 9, wobei die Menü-Option (404, 406), die dem Auswahlbereich (408) am nächsten ist, angezeigt wird, andere Menü-Optionen nicht sichtbar sind und/oder die Rückmeldung, die für den Benutzer bereitgestellt wird, wenn das Ende der Menü-Struktur erreicht wird, sich von der Rückmeldung unterscheidet, die für den Benutzer bereitgestellt wird, wenn die Menü-Option aktiviert wird.

11. Computerprogrammprodukt nach einem der vorhergehenden Ansprüche 9 bis 10, wobei die Berechnungsvorrichtung ein Smartphone (500; 600; 700) ist.

## Revendications

1. Procédé destiné à un dispositif informatique (100) ayant une interface utilisateur graphique (302) comprenant un dispositif d'affichage (110) pour l'affichage d'une vue d'interface utilisateur et un écran tactile pour recevoir une saisie provenant d'un utilisateur, le procédé comprenant:
l'affichage (910) d'un élément d'interface utilisateur sur le dispositif d'affichage (110);
l'indication d'une structure de menu ouvrable par un indicateur de menu (308) sur un côté de l'élément d'interface utilisateur;
l'ouverture (920) de la structure de menu sur le côté de l'élément d'interface utilisateur par un contact tactile sur un point arbitraire de l'écran tactile, la structure de menu comprenant au moins un article de menu (404, 406) et une zone de sélection (408), et ledit au moins un article de menu (404, 406) pouvant être déplacé par rapport à la zone de sélection (408);
le déplacement d'au moins un article de menu lorsque le contact tactile s'éloigne de l'indicateur de menu;
l'indication du déplacement de l'au moins un article de menu sur la zone de sélection (408) par une rétroaction visuelle, audio et/ou haptique;
l'activation de l'article de menu qui est le plus proche de la zone de sélection (408) lorsqu'il est détecté que le contact tactile avec l'écran tactile est relâché;
l'indication de l'activation de l'article de menu à partir de la structure de menu par rétroaction visuelle, audio et/ou haptique;
et
le verrouillage de la structure de menu dans l'état ouvert et la fourniture d'une rétroaction pour l'utilisateur lorsque la fin de la structure de menu est atteinte, et l'activation d'un article de menu en réponse à une pression brève sur le dit article de menu.

2. Procédé selon la revendication 1, dans lequel la structure de menu indiquée par l'indicateur de menu (308, 310) est ouverte lorsqu'il est détecté que le contact tactile détecté s'éloigne de l'indicateur de menu (308, 310).

3. Procédé selon l'une quelconque des revendications précédentes 1 et 2, dans lequel l'élément d'interface utilisateur est une photo, une vue d'écran de verrouillage ou toute autre vue d'un dispositif terminal, une page web, une application agenda ou une liste de numéros de téléphone, un historique téléphonique, des signets, des dates ou des photos d'une galerie de photos.

4. Procédé selon l'une quelconque des revendications précédentes 1 à 3, dans lequel l'article de menu (404, 406) qui est le plus proche de la zone de sélection (408) est affiché, et les autres articles de menu sont invisibles.

5. Procédé selon la revendication 1, dans lequel la rétroaction fournie pour l'utilisateur lorsque la fin de la structure de menu est atteinte est différente de la rétroaction fournie pour l'utilisateur lorsque l'article de menu est activé.

6. Appareil (100) comprenant une unité de traitement (220), une mémoire (210) couplée à ladite unité de traitement (220) et une interface utilisateur graphique (302) comprenant un dispositif d'affichage (110) pour l'affichage d'un élément d'interface utilisateur et un écran tactile pour recevoir une saisie provenant d'un utilisateur, ladite mémoire (210) étant configurée pour stocker un code de programme informatique et des données d'interface utilisateur, et ladite interface utilisateur graphique (302) étant couplée à ladite mémoire (210) et à ladite unité de traitement de données (220), l'unité de traitement (220) étant configurée pour exécuter le code de programme stocké dans la mémoire (210), ce après quoi l'appareil (100) est configuré pour afficher (910) un élément d'interface utilisateur sur le dispositif d'affichage (110) ; indiquer une structure de menu ouvrable par un indicateur de menu (308) sur un côté de l'élément d'interface utilisateur;
ouvrir (920) la structure de menu sur le côté de l'élément d'interface utilisateur par un contact tactile sur un point arbitraire de l'écran tactile, la structure de menu comprenant au moins un article de menu (404, 406) et une zone de sélection (408), et ledit au moins un article de menu (404, 406) pouvant être déplacé par rapport à la zone de sélection (408);
déplacer au moins un article de menu lorsque le contact tactile s'éloigne de l'indicateur de menu;
indiquer le déplacement de l'au moins un article de menu sur la zone de sélection (408) par une rétroaction visuelle, audio et/ou haptique;
activer l'article de menu qui est le plus proche de la zone de sélection (408) lorsqu'il est détecté que le contact tactile avec l'écran tactile est relâché;
indiquer l'activation de l'article de menu à partir de la structure de menu par une rétroaction visuelle, audio et/ou haptique;
et
verrouiller la structure de menu dans l'état ouvert et fournir une rétroaction pour l'utilisateur lorsque la fin de la structure de menu est atteinte, et activer un article de menu en réponse à une pression brève sur ledit article de menu.

7. Appareil selon la revendication 6, dans lequel l'élément d'interface utilisateur est une photo, une vue d'écran de verrouillage ou toute autre vue d'un dispositif terminal, une page web, une application agenda ou une liste de numéros de téléphone, un historique téléphonique, des signets, des dates, ou des photos d'une galerie de photos.

8. Appareil selon l'une quelconque des revendications précédentes 6 et 7, l'appareil étant un mobile multifonctions (500; 600; 700).

9. Produit programme d'ordinateur, stocké sur un support lisible par un ordinateur et exécutable dans un dispositif informatique comprenant une interface utilisateur graphique (302) comprenant un dispositif d'affichage (110) pour afficher un élément d'interface utilisateur et un écran tactile pour recevoir une saisie provenant d'un utilisateur, le produit programme d'ordinateur comprenant des instructions pour:
afficher (910) un élément d'interface utilisateur sur le dispositif d'affichage (110);
indiquer une structure de menu ouvrable par un indicateur de menu (308) sur un côté de l'élément d'interface utilisateur;
ouvrir (910) la structure de menu sur le côté de l'élément d'interface utilisateur par un contact tactile sur un point arbitraire de l'écran tactile, la structure de menu comprenant au moins un article de menu (404, 406) et une zone de sélection (408), et ledit au moins un article de menu (404, 406) pouvant être déplacé par rapport à la zone de sélection (408);
déplacer au moins un article de menu lorsque le contact tactile s'éloigne de l'indicateur de menu;
indiquer le déplacement de l'au moins un article de menu sur la zone de sélection (408) par une rétroaction visuelle, audio et/ou haptique;
activer l'article de menu qui est le plus proche de la zone de sélection (408) quand il est détecté que le contact tactile avec l'écran tactile est relâché;
indiquer l'activation de l'article de menu à partir de la structure de menu par une rétroaction visuelle, audio et/ou haptique;
et
verrouiller la structure de menu dans l'état ouvert et fournir une rétroaction pour l'utilisateur lorsque la fin de la structure de menu est atteinte, et activer un article de menu en réponse à une pression brève sur ledit article de menu.

10. Produit programme d'ordinateur selon la revendication 9, dans lequel l'article de menu (404, 406) qui est le plus proche de la zone de sélection (408) est affiché, les autres articles de menu sont invisibles et/ou la rétroaction fournie pour l'utilisateur lorsque la fin de la structure de menu est atteinte est différente de la rétroaction fournie pour l'utilisateur lorsque l'article de menu est activé.

11. Produit programme d'ordinateur selon l'une quelconque des revendications précédentes 9 et 10, dans lequel le dispositif informatique est un mobile multifonctions (500, 600, 700).
